# EUROPEAN PATENT APPLICATION

(11) **EP 4 706 868 A1**
(43) Date of publication of application: **11.03.2026**
(21) Application number: 24800013.5
(22) Date of filing: 25.01.2024
(51) Int. Cl.: B23K 26/14, B23K 26/38

(54) **LASER CUTTING NOZZLE**

(30) Priority: 02.05.2023 JP 2023075977; 30.10.2023 JP 2023185254
(71) Applicant: Koike Sanso Kogyo Co., Ltd., Tokyo 130-0012 (JP)
(72) Inventor: KAMIKIHARA, Hirotaka, Tokyo 130-0012 (JP)
(74) Representative: Westphal, Mussgnug & Partner Patentanwälte mbB
(86) International application number: PCT/JP2024/002245
(87) International publication number: WO 2024/228282

(57) **Abstract**

An object is to provide a laser cutting nozzle that can suppress a temperature rise of the inner nozzle. Disclosed is a laser cutting nozzle having an inner nozzle, and an outer nozzle configured to eject shield gas from a flow path of the shield gas formed between the outer nozzle and the inner nozzle, wherein the inner nozzle includes: a main body portion in which a through hole is formed through which the laser beam and the assist gas pass; a fitting portion formed in a position distanced from one end portion of the main body portion for a predetermined length, the fitting portion having an outer diameter greater than an outer diameter of the main body portion; a plurality of through holes formed by penetrating the fitting portion in a thickness direction; and a flange formed in a position distanced from the fitting portion in a direction to another end portion from the main body portion, the position being opposed to the plurality of through holes, and wherein the outer nozzle includes: a fitting recessed portion to which the fitting portion of the inner nozzle fits; and a flow path surface that forms the flow path of the shield gas together with an outer surface of the inner nozzle, the flow path surface having an inner diameter greater than an outer diameter of the main body portion of the inner nozzle and less than an inner diameter of the fitting recessed portion.

## Description

### Technical Field

The present invention relates to a laser cutting nozzle that can suppress a temperature rise of the inner nozzle in particular when cutting a material to be cut with laser.

A laser cutting method is used that emits a laser beam toward the material to be cut from a laser cutting nozzle while ejecting assist gas as to accompany the laser beam as well as ejecting shield gas as to envelop the laser beam and the assist gas.

The laser cutting nozzle disclosed in Patent Literature 1 is configured such that an inner nozzle fits to an outer nozzle. In a case where the material to be cut is a steel plate, a laser beam is emitted from an ejecting hole formed at the center of the inner nozzle, assist gas consisting of oxygen gas is ejected, and shield gas whose oxygen purity is appropriately adjusted is ejected from an ejecting port formed between the inner nozzle and the outer nozzle. Especially, the shield gas is ejected from the ejecting port while passing through a plurality of openings formed along the axial center at the inner surface side of the outer nozzle.

### Prior Art Document

### Patent Literature

### Patent Literature 1: JP 2019-093438 A

When cutting a material to be cut, a beam control of pulse oscillation or continuous wave (CW) oscillation is used. The pulse oscillation and continuous wave (CW) oscillation oscillate by controlling a common laser oscillation device and use a common laser cutting nozzle. According to the plate thickness of a material to be cut or cutting purposes, one of the pulse oscillation and the continuous wave oscillation is selected. The focal position for the material to be cut is set by adjusting the distance (height) of the lens that focuses the laser beam from the material to be cut corresponding to the thickness of the material to be cut. The setting of the focal position may also be performed by using a collimator lens located at an upper portion of the condensing lens.

When performing the CW cutting, the beam diameter with which the surface of the steel plate is irradiated is set to be larger than the case of the pulse cutting. As a result, the inner nozzle is heated by the laser beam interfering with the ejecting port, which leads to an increase in temperature of the inner nozzle. This invites a defect or malfunction of the components accompanied by the inner nozzle, or affects the cutting performance.

An object of the present invention is to provide a lase cutting nozzle that can suppress an increase in temperature of the inner nozzle.

### Summary of the Invention

To solve the above described problem, a representative laser cutting nozzle of the present invention comprises:
an inner nozzle configured to emit a laser beam and to eject assist gas toward a material to be cut; and
an outer nozzle to which the inner nozzle is fitted, the outer nozzle being configured to eject shield gas toward the material to be cut from a flow path of the shield gas formed between the outer nozzle and the inner nozzle,
wherein the inner nozzle includes:
   a main body portion at a center of which a through hole is formed through which the laser beam and the assist gas pass;
   a fitting portion formed in a position distanced from one end portion of the main body portion for a predetermined length, the fitting portion having an outer diameter greater than an outer diameter of the main body portion;
   a plurality of through holes formed by penetrating the fitting portion in a thickness direction; and
   a flange formed in a position distanced from the fitting portion in a direction to another end portion from the main body portion, the position being opposed to the plurality of through holes, and
   wherein the outer nozzle includes:
      a fitting recessed portion to which the fitting portion formed on the inner nozzle fits; and
      a flow path surface that forms the flow path of the shield gas with an outer surface of the inner nozzle when the inner nozzle is fitted to the outer nozzle, the flow path surface having an inner diameter greater than an outer diameter of the main body portion of the inner nozzle and less than an inner diameter of the fitting recessed portion.

A laser cutting nozzle according to the present invention has a fitting portion on the outer circumference of the main body portion of the inner nozzle. In the fitting portion, a plurality of the through holes are formed. Therefore, when the inner nozzle is fitted to the outer nozzle and shield gas is supplied, the supplied shield gas passes through the through holes of the fitting portion and is ejected from the flow path of the shield gas formed between the inner nozzle and the outer nozzle toward the material to be cut. Therefore, the inner nozzle can be directly cooled while the shield gas flows through the fitting portion of the inner nozzle.

Further, the flange is formed to be opposed to the through holes formed in the fitting portion of the inner nozzle, so that the flange can exert a heat exchanging function. Therefore, the shield gas having passed through the through holes is directly blown to the flange to cool the inner nozzle.

It is not preferable that there is a difference in ejecting pressure between the shield gas ejected from the portion of the extended lines of the through holes and the shield gas ejected from the other portions when the shield gas having passed through the through holes formed in the fitting portion is ejected from the cutting nozzle. However, by the shield gas having passed through the through holes being blown to the flange formed to be opposed to the through holes, the ejecting pressure can be averaged.

### Brief Description of Drawings

FIG. is a diagram illustrating the state in which a laser cutting nozzle according to the first embodiment of the present invention is attached to a laser cutting torch.

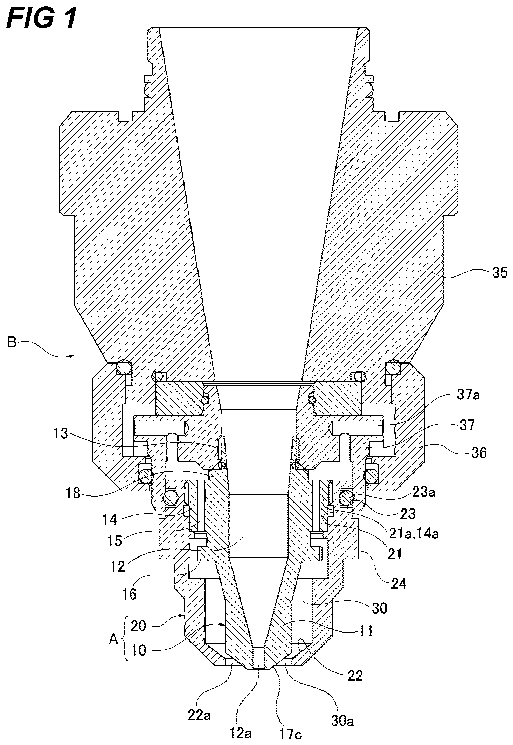

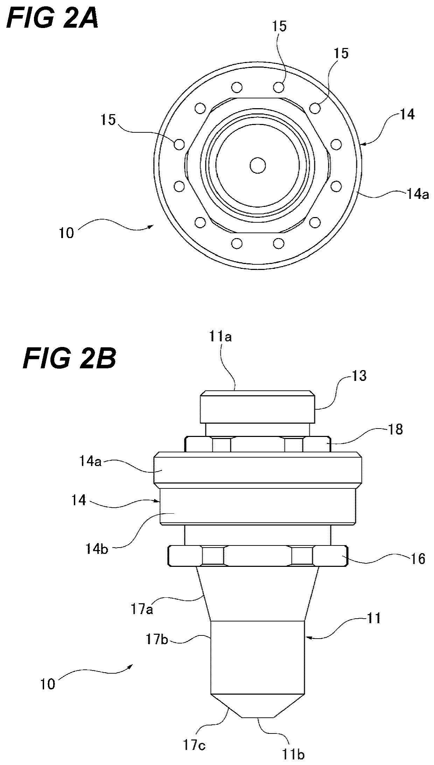

FIGS. 2A and 2B are diagrams showing external views of an inner nozzle according to the first embodiment of the present invention.

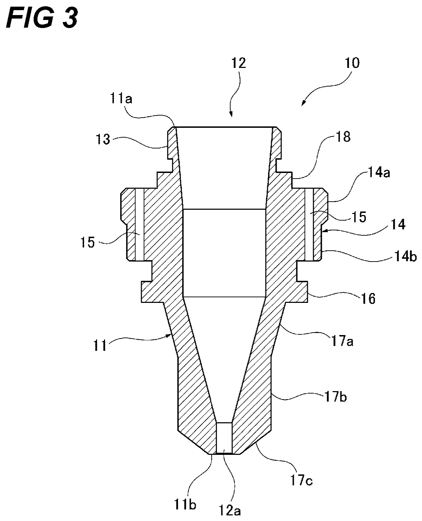

FIG. 3 is a diagram showing a cross-sectional view of the inner nozzle according to the first embodiment of the present invention.

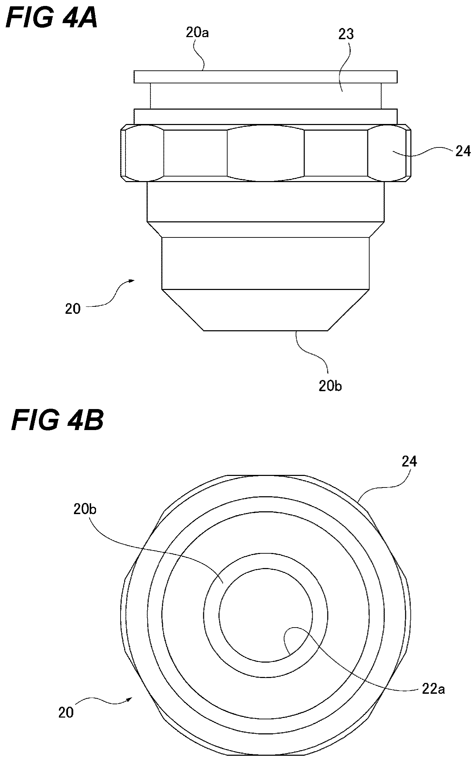

FIGS. 4A and 4B are diagrams showing external views of an outer nozzle.

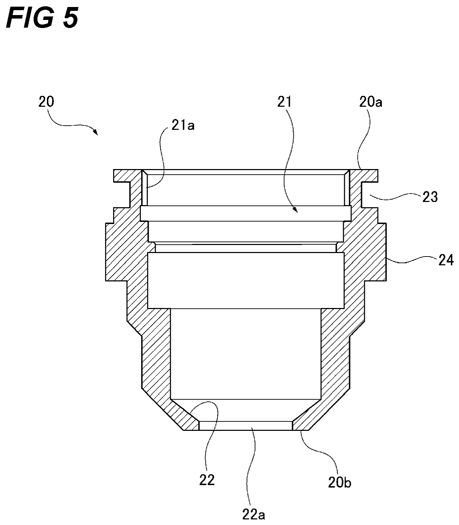

FIG. 5 is a diagram showing a cross-sectional view of the outer nozzle.
FIG. 6 is a diagram showing a comparison of an increase in temperature between the cutting nozzle disclosed in Patent Literature 1 and the cutting nozzle according to the first embodiment of the present invention.
FIGS. 7A and 7B are diagrams showing external views of an inner nozzle according to the second embodiment of the present invention.
FIGS. 8A and 8B are diagrams showing cross-sectional views of an inner nozzle according to the third embodiment of the present invention.
FIG. 9 is a diagram showing a cross-sectional view of an inner nozzle according to the fourth embodiment of the present invention.
FIGS. 10A and 10B are diagrams showing cross-sectional views of an inner nozzle according to the fifth embodiment of the present invention.

### Description of Embodiments

The laser cutting nozzle according to the present invention (hereinafter referred to as "cutting nozzle") is used for cutting a material to be cut such as a steel plate by irradiating the material to be cut with laser while ejecting assist gas, and further ejecting shield gas as to envelop the laser beam and the assist gas. Especially, the cutting nozzle according to the present invention is aimed at suppressing an increase in temperature of the inner nozzle due to the laser beam interfering with the ejecting port when cutting a material to be cut.

The laser cutting nozzles according to the first to fifth embodiments of the present invention utilize a common outer nozzle. However, the shape and the configuration of the inner nozzles of these embodiments are different from each other. Furthermore, these cutting nozzles are used with one common laser torch.

The cutting nozzle A according to the first embodiment has the inner nozzle 10 and the outer nozzle 20 and is configured by the inner nozzle 10 fitting to the outer nozzle 20. Further, the cutting nozzle A is configured to be able to cut a material to be cut (not shown) when the cutting nozzle A is attached to the torch B.

The flow path 12 for the laser beam and the assist gas is formed at the center in the axial direction on the main body portion 11 of the inner nozzle 10. The ejecting port 12a is formed on the tip of the flow path 12. At the end portion 11a of the main body portion 11 opposite to the end portion where the ejecting port 12a is formed, the screw 13 for attaching the inner nozzle 10 to the torch B (the insulation portion 37 attached to the torch B).

The fitting portion 14 is formed that fits to the fitting recessed portion 21 of the outer nozzle 20 on the outer circumference of the main body portion 11 at the position that is distanced from the screw 13 formed on the end portion 11a. The screw 14a is formed at the side closer to the end portion 11a of the main body portion 11 on the fitting portion 14 and the boss portion 14b is formed continuously to the screw portion 14a.

The through holes 15 are formed in the fitting portion 14 such that the through holes 15 penetrate the fitting portion 14 in the width direction, namely, in parallel with the central axis of the main body portion 11. The through holes 15 are provided for circulating shield gas and the entire amount of the shield gas supplied to the cutting nozzle A passes through the through holes 15. In the process of the shield gas passing through the through holes 15, the inner nozzle 10 can be directly cooled so that the cooling efficiency can be improved.

The flange 16 is formed in a position separated from the boss portion 14b of the fitting portion 14. The flange 16 formed opposite the through holes 16 formed in the fitting portion 14.

The flange 16 is shaped to be like a wing having a large surface area, so that heat-exchange can be performed between the inner nozzle 10 and the shield gas. By the cold shield gas externally supplied blowing against the flange 16, inner nozzle 10 can be effectively cooled.

As described above, the shield gas having passed through the through holes 15 blows against the flange 16, causing a turbulence in the flow of the shield gas having passed through the through holes 15. As a result, the uniformity of the shield gas flow downstream of the flange 16 can be realized.

From the flange 16 toward the other side end portion 11b on the main body portion 11, the taper portion 17a with a smaller angle, the straight portion 17b, and the taper portion 17c with an angle larger than the taper portion 17a are formed in this order. The taper portion 17c defines the ejecting direction when the shield gas is ejected from the cutting nozzle A toward a material to be cut. Therefore, the angle of the taper portion 17c is set so as for the ejected shield gas is effectively introduced to a cutting groove of the material to be cut.

Between the screw 13 and the fitting portion 14, the chamfered portion 18 is provided that is chamfered to be a hexagonal shape. The chamfered portion 18 can be used as a spanner hook when the inner nozzle 10 is fitted to the outer nozzle 20 to integrating them.

When the inner nozzle 10 is fitted to the outer nozzle 20, the shield gas flow path 30 is formed between the fitting portion 14 of the inner nozzle 10 and the tapered portion 17c. For which, the fitting recessed portion 21 is formed on the inner surface of the end portion 20a of the outer nozzle 20. In the position closer to the end portion 20a than the fitting recessed portion 21, the screw 21a is formed that threadedly engages with the screw 14a formed on the inner nozzle 10.

Further, the tapered portion 22 is formed on the inner surface of the outer nozzle 20 at the end portion 20b side. The tapered portion 22 has the angle corresponding to the angle of the tapered portion 17c of the inner nozzle 10. At the tip of the tapered portion 22, opening 22a is formed. Further, when the inner nozzle 10 is fitted to the outer nozzle 20, the ring-shaped ejecting port 30a for the shield gas is formed with the help of the tapered portion 17c of the inner nozzle 10.

On the outer circumferential surface of the outer nozzle 20 at the end portion 20a side, the O-ring groove 23 is formed. By attaching the cutting nozzle to the torch B with the O-ring 23a mounted in the O-ring groove 23, airtightness can be maintained.

In a position closer to the end portion 20b than the O-ring groove 23, the chamfered portion 24 having a hexagonal shape is formed. The chamfered portion 24 can be used as a spanner hook when the cutting nozzle A is attached the torch B.

By inserting the inner nozzle 10 as configured above into the outer nozzle 20 and by fastening the screw 14 to the the screw 21a, the cutting nozzle A can be configured.

The height following sensor 35 is disposed at the end portion side of the torch B. The insulator 37 is attached to the height following sensor 35 with the nozzle head holder 36 having a cup nut shape. In particular, the multiple through holes 37a that communicates to the shield gas flow path 30 are formed in the insulator 37.

The procedure for attaching the cutting nozzle A to the torch B configured as above will be described. At first, the cutting nozzle A is configured by assemblage by fitting the inner nozzle 10 to the outer nozzle 20 and by fastening them by applying a spanner to the chamfered portion 18. Subsequently, the cutting nozzle A can be attached to the torch B by inserting the cutting nozzle A to the nozzle head holder 36 and by fastening them by applying a spanner to the chamfered portion 24 of the outer nozzle 20.

An experiment was performed in which a temperature rise is measured for inner nozzles of the cutting nozzle A as configured above and the conventional cutting nozzle disclosed in Patent Literature 1.

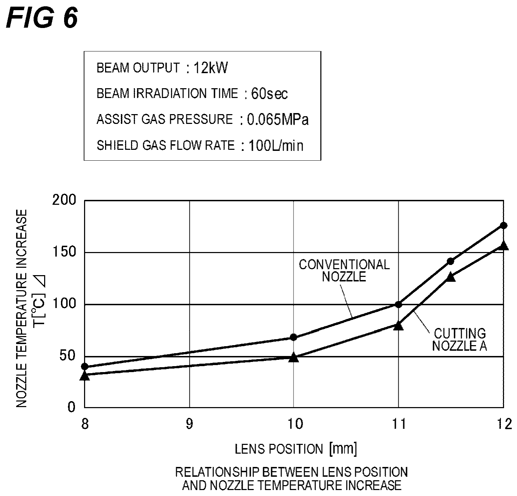

In this experiment, a temperature of the inner nozzles of both of the cutting nozzles was measured by touching the tips of the inner cutting nozzles with a thermocouple each time a laser beam is emitted with the lens position being changed from 8 [mm] to 12 [mm] in a step of 1 [mm] in the following conditions: the output is 12 [kW], the irradiation time is 60 [sec], the pressure of the assist gas is 0.065 [MPa], and the shield gas flow rate is 100 [L/min]. The result of this experiment is shown in FIG. 6.

As shown in the figure, as compared with the temperature rise in the conventional cutting nozzle, the cutting nozzle A can suppress a temperature rise by about 20 [°C].

As described above, in the inner nozzle 10 according to the present embodiment, the fitting portion 14 whose diameter is larger than that of the main body portion 11 is formed on the main body portion 11, requiring thicker material as compared to the inner nozzle of the cutting nozzle disclosed in Patent Literature 1, leading to a higher cost for materials. However, as shown in FIG. 6, a temperature rise can be suppressed so that a sufficient effect can be achieved in longer life time, and stability of quality of a cutting surface.

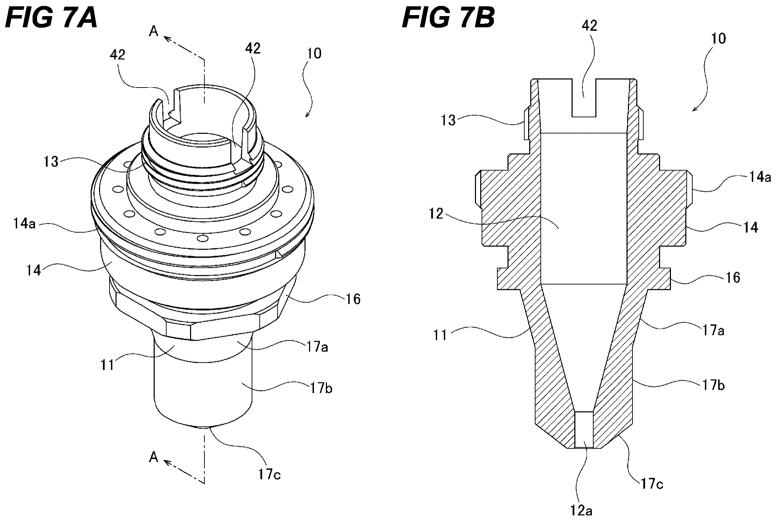

Next, an inner nozzle according to the second embodiment of the present invention will be described referring to FIGS. 7A and 7B. In the figures, the same reference characters are added to the same portions as those in the above described first embodiment or the portions having the same functions as those in the above described first embodiment, and the corresponding description will be omitted (the same applies to the following embodiments).

The inner nozzle 10 according to the above described first embodiment is configured to be rotated with a spanner applied to the chamfered portion 18 when being fitted to and integrated with the outer nozzle 20. However, there exists a problem that such operation is difficult because of the size in the width direction of the chamfered portion 18 is small. The inner nozzle 10 according to the second embodiment has been developed to solve this problem.

In the inner nozzle 10 according to the second embodiment, the cut-out 42 that penetrates the end portion 11a in the radial direction instead of the chamfered portion 18 formed between the screw 13 and the fitting portion 14. A coin or a screw driver can be inserted into the cut-out 42 and by operating the inserted coin or screw driver, the inner nozzle 10 can be easily fitted and fastened to the outer nozzle 20.

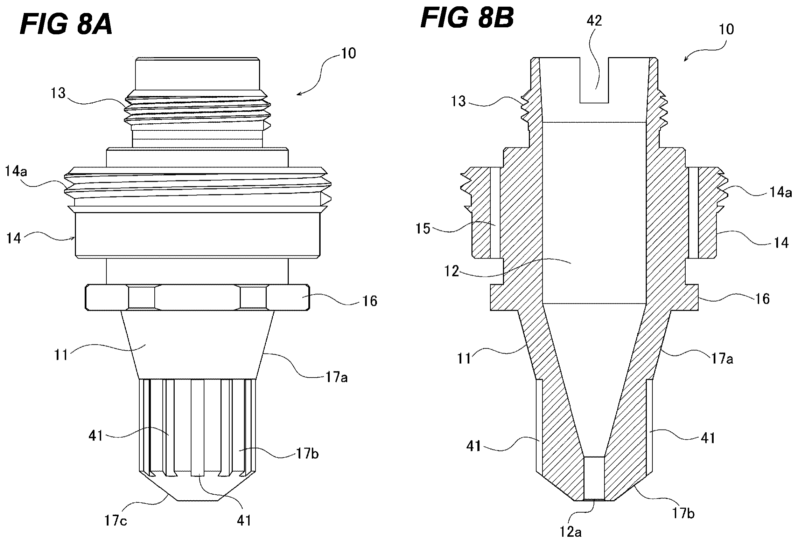

Next, the inner nozzle 10 according to the third embodiment of the present invention will be described referring to FIGS. 8A and 8B. In the present embodiment, multiple slits 41 are formed along the longitudinal direction downstream of the flange 16 formed on the main body portion 11 of the inner nozzle 10 in the flow direction of the shield gas, specifically on the straight portion 17b. With this configuration, the surface area of the straight portion 17b can be made larger, so that the heat exchange efficiency between the inner nozzle 10 and the shield gas that flows in the shield gas flow path 30 can be improved.

Therefore, the cooling of the inner nozzle 10 is promoted with the shield gas so that a temperature rise can be suppressed. The number, the width, and the depth of the slits 41 are not limited and it is preferable that they are appropriately set according to the outer diameter and the length of the straight portion 17b.

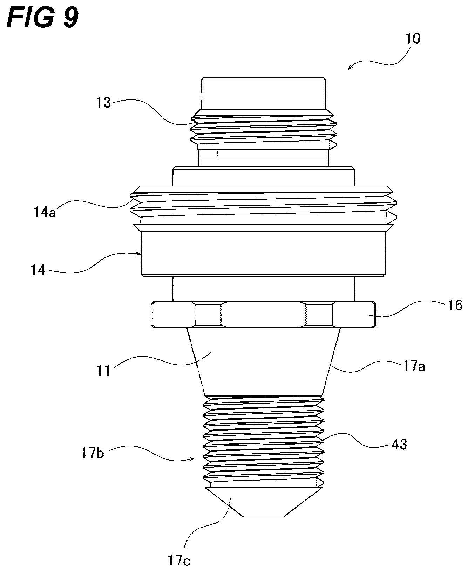

The inner nozzle 10 according to the fourth embodiment will be described referring to FIG. 9. On the outer circumferential surface of the straight portion 17b formed at the main body portion 11 of the inner nozzle 10, a spiral groove is formed. In the present embodiment, the spiral groove constitutes the screw 43. By forming the screw 43, the surface area of the straight portion 17b is made larger. Similar to the above described third embodiment, the efficiency of the heat exchange between the shield gas flowing in the shield gas flow path 30 and the inner nozzle 10 can be improved.

Therefore, the cooling of the inner nozzle 10 is promoted with the shield gas so that a temperature rise can be suppressed. The pitch of the screw 43 is not limited and it is preferable that it is appropriately set according to the outer diameter and the length of the straight portion 17b.

The groove formed on the straight portion 17b in the circumferential direction is not necessarily a screw and multiple separate grooves may be formed on the circumferential surface.

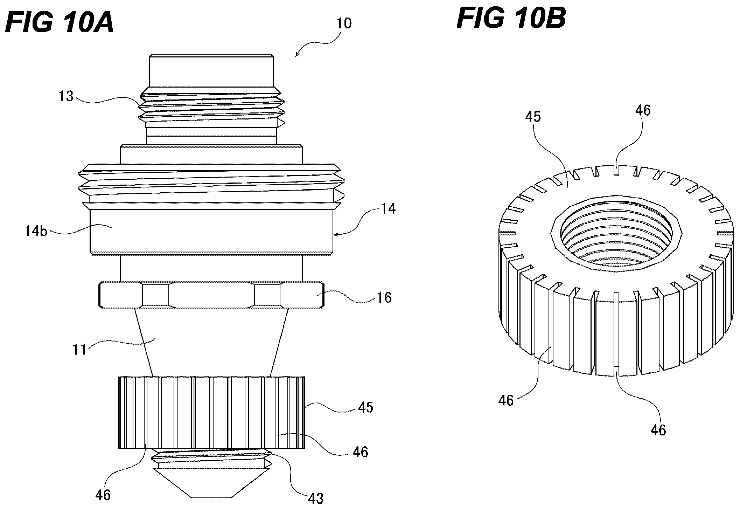

The inner nozzle 10 according to the fifth embodiment will be described referring to FIGS. 10A and 10B. On the straight portion 17b formed on the main body portion 11 of the inner nozzle 10, the slit member 45 is disposed. On the slit member 45, multiple slits 46 are formed along the direction of the shield gas flowing on the outer circumferential surface.

The slit member 45 has the outer diameter that is a bit less than the inner diameter of the outer nozzle 20, so that the slit member 45 does not interfere with the operation of fitting the inner nozzle 10 to the outer nozzle 20. The slits 46 have such a number, a width, and a depth that the flow rate of the shield gas required for the cutting nozzle is satisfied.

The structure for attaching the slit member 45 to the straight portion 17b is not specially limited. For example, in the present embodiment, the slit member 45 is disposed by being screwed to the screw 43 formed on the straight portion 17b. Further, the slit member 45 can be disposed by being fitted to the straight portion 17b and attaching the slit member 45 to the straight portion 17b with a retaining ring. Furthermore, the slit member 45 can be provided by integrally forming it when the inner nozzle 10 is produced.

As described above, by disposing the slit member 45 on the straight portion 17b, the heat capacity of the inner nozzle 10 can be increased so that a temperature rise of the inner nozzle 10 itself can be suppressed. Moreover, the cooling of the inner nozzle 10 is promoted by the shield gas so that a temperature rise can be further suppressed.

The laser cutting nozzle according to the present invention is very effective when used in cutting a steel plate in that a temperature rise of the inner nozzle can be suppressed and the life of the laser cutting nozzle can be extended.

### (Reference Character List)

- A: cutting nozzle
- B: torch
- 10: inner nozzle
- 11: main body portion
- 11a, 11b, 20a and 20b: end portion
- 12: flow path
- 12a: ejecting port
- 13, 14 and 21a: screw
- 14: fitting portion
- 14b: boss portion
- 15: through hole
- 16: flange
- 17a, 17c and 22: tapered portion
- 17b: straight portion
- 18: chamfered portion
- 20: outer nozzle
- 21: fitting recessed portion
- 22a: opening
- 23: O-ring groove
- 23a: O-ring
- 24: chamfered portion
- 30: shield gas flow path
- 30a: ejecting port
- 35: height following sensor
- 36: nozzle head holder
- 37: insulator
- 37a: through hole
- 41, 46: slit
- 42: cut-out
- 43: screw
- 45: slit member#

## Claims

1. A laser cutting nozzle(A) comprising:
an inner nozzle (10) configured to emit a laser beam and to eject assist gas toward a material to be cut; and
an outer nozzle (20) to which the inner nozzle is fitted, the outer nozzle being configured to eject shield gas toward the material to be cut from a flow path of the shield gas (30) formed between the outer nozzle and the inner nozzle,
wherein the inner nozzle includes:
a main body portion (11) at a center of which a through hole (12) is formed through which the laser beam and the assist gas pass;
a fitting portion (14) formed in a position distanced from one end portion of the main body portion for a predetermined length, the fitting portion having an outer diameter greater than an outer diameter of the main body portion;
a plurality of through holes (15) formed by penetrating the fitting portion in a thickness direction; and
a flange (16) formed in a position distanced from the fitting portion in a direction to another end portion from the main body portion, the position being opposed to the plurality of through holes, and
wherein the outer nozzle includes:
a fitting recessed portion (21) to which the fitting portion formed on the inner nozzle fits; and
a flow path surface that forms the flow path of the shield gas (30) together with an outer surface of the inner nozzle when the inner nozzle is fitted to the outer nozzle, the flow path surface having an inner diameter greater than an outer diameter of the main body portion of the inner nozzle and less than an inner diameter of the fitting recessed portion.

2. The laser cutting nozzle according to claim 1,
wherein a plurality of slits (41) are formed on the main body portion along a longitudinal direction at a downstream side of the flange formed on the main body portion in a flow direction of the shield gas.

3. The laser cutting nozzle according to claim 1,
wherein a plurality of grooves or a spiral groove (43) are/is formed on the main body portion along a circumferential surface at a downstream side of the flange formed on the main body portion in a flow direction of the shield gas.

4. The laser cutting nozzle according to claim 1,
wherein a slit member (45) on an outer circumferential surface of which a plurality of slits (46) are formed is disposed on the main body portion at a downstream side of the flange formed on the main body portion in a flow direction of the shield gas.

5. The laser cutting nozzle according to claim 1,
wherein the laser beam emitted from the inner nozzle toward the material to be cut is a laser beam by continuous wave oscillation.
